# EUROPEAN PATENT APPLICATION

(11) **EP 4 509 334 A1**
(43) Date of publication of application: **19.02.2025**
(21) Application number: 23787545.5
(22) Date of filing: 03.04.2023
(51) Int. Cl.: B60D 1/48

(54) **FIXING PLATE ASSEMBLY, TOW HOOK, AND VEHICLE**

(30) Priority: 12.04.2022 CN 202220834521 U
(71) Applicant: Nio Technology (Anhui) Co., Ltd, Hefei City, Anhui 230601 (CN)
(72) Inventor: LIU, Yuxuan, Hefei, Anhui 230601 (CN); SHI, Wenhui, Hefei, Anhui 230601 (CN); PAN, Mingyue, Hefei, Anhui 230601 (CN); CHENG, Ming, Hefei, Anhui 230601 (CN); SHEN, Ke, Hefei, Anhui 230601 (CN); WANG, Hongli, Hefei, Anhui 230601 (CN)
(74) Representative: Vossius & Partner Patentanwälte Rechtsanwälte mbB
(86) International application number: PCT/CN2023/085914
(87) International publication number: WO 2023/197900

(57) **Abstract**

A fixing plate assembly, a tow hook, and a vehicle. A fixing plate assembly (100) is used for a tow hook of a vehicle. The fixing plate assembly (100) comprises a fixing plate (2) and a travel switch (3), and further comprises a bracket (1) fixed on the fixing plate (2). The travel switch (3) is mounted on a limiting part (11) of the bracket (1). The bracket (1) limits the movement of the travel switch (3) by means of the limiting part (11). The fixing plate assembly can better position and fix the travel switch.

## Description

### TECHNICAL FIELD

This utility application relates to the technical field of tow hooks of vehicles, and in particular to a fixing plate assembly, a tow hook provided with the fixing plate assembly, and a vehicle provided with the tow hook.

### BACKGROUND ART

An electric tow hook actuating mechanism is typically driven by an electric motor to make a tow hook reach a specified position. When the tow hook is in place, it is necessary to lock the electric tow hook to prevent the electric motor from being damaged by a reaction force of the tow hook. Therefore, in the electric tow hook actuating mechanism, when the tow hook is in place, a travel switch in the actuating mechanism is generally triggered by a rotating locking block. The travel switch is triggered when the locking block is rotated in place, and transmits a trigger signal to a controller, so that the controller obtains information indicating that the tow hook is already locked and feeds the information back to the vehicle, so that a user can proceed to the next operation.

In the electric tow hook actuating mechanism, the locking block which triggers the travel switch is in a rotating state. If the travel switch is forced to move, signal trigger at an improper time or trigger failure will be caused, which eventually may result in the operation failure of the actuating mechanism. A conventional method for fixing the travel switch is to directly fix the travel switch to a fixing plate of the electric tow hook by using a bolt. This method causes a positioning difficulty during assembly, and the travel switch is likely to loosen after undergoing vibration and impact in use.

### SUMMARY

In an aspect of this utility application, the technical problem to be solved is how to better position and fix a travel switch on a fixing plate.

In addition, other aspects of this utility application aim to solve or alleviate other technical problems existing in the prior art.

This utility application provides a fixing plate assembly, a tow hook and a vehicle. Specifically, according to an aspect of this utility application, provided is:
a fixing plate assembly used for the tow hook of the vehicle. The fixing plate assembly comprises a fixing plate and a travel switch, wherein the fixing plate assembly further comprises a bracket fixed to the fixing plate, the travel switch being mounted on a limiting portion of the bracket, and the bracket limiting the movement of the travel switch by means of the limiting portion.

Optionally, according to an implementation of this utility application, the limiting portion is configured as a cover shaped to match the travel switch, a bottom wall of the limiting portion is in contact with the travel switch, and side walls of the limiting portion surround the travel switch.

Optionally, according to an implementation of this utility application, a first clamping wall and a second clamping wall are formed on the respective side walls, the first clamping wall and the second clamping wall are each formed between two grooves formed in an individual side wall, the grooves extend in a direction perpendicular to the fixing plate, the first clamping wall clamps the position activated switch in a first direction, and the second clamping wall clamps the position activated switch in a second direction which is perpendicular to the first direction.

Optionally, according to an implementation of this utility application, a limiting hole is formed in one of the side walls of the limiting portion, and a connecting post formed on one side of the travel switch is engaged into the limiting hole.

Optionally, according to an implementation of this utility application, there is one second clamping wall, which is formed on the side wall of the limiting portion that is opposite to the limiting hole, and there are two first clamping walls, which are formed on the other two opposite side walls of the limiting portion.

Optionally, according to an implementation of this utility application, a limiting portion mounting hole is formed in the fixing plate, and the side walls of the limiting portion are snapped into the limiting portion mounting hole.

Optionally, according to an implementation of this utility application, a trigger ball accommodating portion is formed on the limiting portion, a through hole is formed in the trigger ball accommodating portion, a trigger ball for triggering the travel switch is accommodated in the through hole, and the trigger ball is pushable by the locking block of the tow hook to move in the through hole in the direction perpendicular to the fixing plate and abuts against a contact of the travel switch.

Optionally, according to an implementation of this utility application, the bracket further comprises a wiring harness fixing portion connected to the limiting portion, and the wiring harness fixing portion fixes a wiring harness of the travel switch to the bracket.

Optionally, according to an implementation of this utility application, the bracket further comprises a bracket mounting portion connected to the limiting portion, a bracket mounting hole is formed in the bracket mounting portion, and the bracket is mounted on the fixing plate by means of a bolt through the bracket mounting hole.

Optionally, according to an implementation of this utility application, the bracket further comprises an arc-shaped intermediate connecting portion with one end connected to the bracket mounting portion, and the wiring harness fixing portion is arranged at the other end of the intermediate connecting portion.

According to another aspect of this utility application, this utility application provides a tow hook, comprising the fixing plate assembly described above.

According to a further aspect of this utility application, this utility application provides a vehicle, comprising a tow hook described above.

This utility application has the beneficial effects as follows.
1. The travel switch is fixed by using a unique bracket structure which can adapt to commonly used travel switches, so that the travel switch is more stably fixed.
2. The bracket structure can ensure accurate positioning of the travel switch during assembly, and can be applied in different mounting positions.
3. The bracket structure cooperates with the fixing plate to provide a function of protecting the travel switch, thereby increasing the strength and rigidity around the travel switch, and ensuring that no electronic element of the travel switch fails in the event of fatigue impact.
4. The bracket structure also fixes the wiring harness to which the travel switch is connected, thereby preventing the problems such as looseness or abnormal noise of the wiring harness in use.
5. A steel ball is used on the bracket structure to ensure forward triggering of the travel switch, reducing the possibility of lateral stress of the contact of the travel switch, and improving the reliability of the entire fixing plate assembly.

### BRIEF DESCRIPTION OF THE DRAWINGS

The above and other features of this utility application will become apparent with reference to the accompany drawings, in which:
FIG. 1 shows a schematic structural diagram of a fixing plate assembly provided according to an implementation of this utility application;
FIG. 2 shows a schematic structural diagram of a bracket of the fixing plate assembly provided according to an implementation of this utility application;
FIG. 3 shows a schematic structural diagram of the bracket of the fixing plate assembly provided according to an implementation of this utility application, as viewed in another direction; and
FIG. 4 shows a schematic structural diagram of a fixing plate of the fixing plate assembly provided according to an implementation of this utility application.

### DETAILED DESCRIPTION OF EMBODIMENTS

It can be readily understood that according to the technical solution of this utility application, a person of ordinary skill in the art may propose a plurality of interchangeable structures and implementations without changing the essential spirit of this utility application. Therefore, the following specific embodiments and the accompanying drawings are merely exemplary descriptions of the technical solution of this utility application, and should not be construed as the entirety of this utility application or construed as limiting the technical solution of this utility application.

Orientation terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different usage states. Therefore, these or other orientation terms should not be construed as restrictive terms as well. Moreover, the terms such as "first" "second", "third" or similar expressions are only used for description and distinction purposes, and should not be construed as indicating or implying the relative importance of corresponding members.

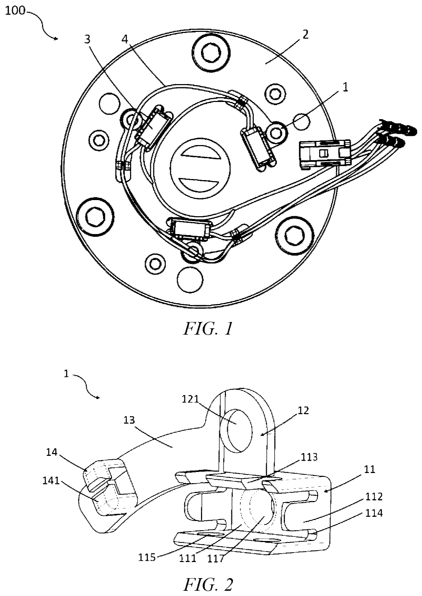

Reference is made to FIG. 1, which shows a schematic structural diagram of a fixing plate assembly 100 provided according to an implementation of this utility application. The fixing plate assembly 100 provided according to an implementation of this utility application is used for a tow hook of a vehicle, and comprises a bracket 1, a fixing plate 2, a travel switch 3 and a wiring harness 4. The fixing plate 2 is configured as a circular plate in an embodiment of FIG. 1, such that the fixing plate 2 has an axial direction and a radial direction. Of course, the fixing plate 2 may also be configured in other shapes. A main shaft is connected to the center of the fixing plate 2, and an electric motor drives the main shaft to rotate in the fixing plate 2. The bracket 1 is fixed to the fixing plate 2 by means of a bolt. The travel switch 3 is clamped in the bracket 1, and the wiring harness 4 is connected to the travel switch 3 for supplying power and transmitting an electrical signal. As shown in FIG. 1, the fixing plate assembly 100 may be provided with a plurality of travel switches 3, and correspondingly may be provided with a plurality of brackets 1 matching the travel switches 3 in number. For ease of description, a direction from the travel switch 3 to the bracket 1 in the axial direction of the fixing plate 2 is defined as a direction from top to bottom.

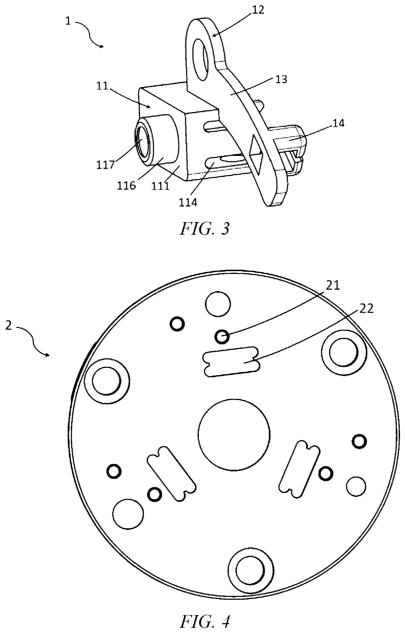

Reference is made to FIG. 2, which shows a schematic structural diagram of the bracket 1 of the fixing plate assembly 100 according to an implementation of this utility application. In an implementation of this utility application, the bracket 1 comprises a limiting portion 11, a bracket mounting portion 12, an intermediate connecting portion 13 and a wiring harness fixing portion 14. The travel switch 3 is clamped in the limiting portion 11. In this implementation, the travel switch 3 has a cuboid or similar shape. When the travel switch 3 is clamped in the limiting portion 11, a rectangular lower surface thereof is arranged closely against the limiting portion 11. In this implementation, the limiting portion 11 is configured as a cover shaped to match the travel switch 3, that is, a square cover, and a bottom wall 111 of the cover is in contact with the lower surface of the travel switch 3 to limit the movement of the travel switch 3 in a direction perpendicular to the fixing plate 2. Side walls of the cover surround and clamp the travel switch 3, thereby limiting the movement of the travel switch 3 in the direction parallel to the fixing plate 2, and also increasing the rigidity and strength around the travel switch 3. The side walls of the limiting portion 11 are snapped into a limiting portion mounting hole 22 (shown in FIG. 4) formed in the fixing plate 2, so that the position of the bracket 1 on the fixing plate 2 can be further limited.

To further limit the movement of the travel switch 3, two first clamping walls 112 and one second clamping wall 113 are further provided on the respective side walls of the limiting portion 11. Each of the two first clamping walls 112 and the one second clamping wall 113 is arranged on one of the side walls of the limiting portion 11, and is connected to, for example, integrally formed with, the bottom wall 111 of the limiting portion 11. The first clamping walls and the second clamping wall are each formed by providing two grooves 114 in the side wall of the limiting portion 11 that extend in the direction from top to bottom such that an elongated wall extending from bottom to top is formed between the two grooves 114. The two grooves 114 can also be used for receiving the wiring harness 4 extending out from the travel switch 3. The elongated wall formed by such a method has a certain elasticity, so that the travel switch 3 can be snapped into and easily taken out from the limiting portion 11. Typically, connecting posts (not shown in the figures), for example, two connecting posts, are formed on one of the side walls of the travel switch 3. Therefore, limiting holes 115, for example, two limiting holes, are correspondingly formed in one of the side walls of the limiting portion 11, that is, the side wall on which none of the first clamping walls 112 and the second clamping wall 113 is formed, and are used for engaging with the connecting posts of the travel switch 3. In order to prevent too low strength of this side wall, no groove 114 and no clamping wall are formed on the side wall. Thus, the limiting portion 11 clamps the travel switch 3 in a first direction (which is a direction parallel to the fixing plate 2 and to the length direction of the lower surface of the travel switch 3 in this embodiment) by means of the two opposite first clamping walls 112; and the limiting portion 11 clamps the travel switch 3 in a second direction (which is a direction parallel to the fixing plate 2 and to the width direction of the lower surface of the travel switch 3 in this embodiment) by means of the second clamping wall 113 and the side wall provided with the limiting holes 115. The first direction is perpendicular to the second direction. In this way, the first direction, the second direction and the axial direction of the fixing plate 2 form the x, y and z directions of a three-dimensional rectangular coordinate system, and the travel switch 3 is limited in the x, y and z directions (limited by the bottom wall of the limiting portion 11 in the z direction), so that the travel switch 3 can be prevented from being forced to move in any direction, thereby avoiding signal trigger at an improper time or trigger failure. Moreover, the travel switch 3 may be further provided with first recesses and a second recess (not shown in the figures) shaped to match the first clamping walls 112 and the second clamping wall 113 respectively, so as to implement more stable limiting and conveniently snap the travel switch 3 into the limiting portion 11.

Reference is made to FIG. 3, which shows a schematic structural diagram of the bracket 1 of the fixing plate assembly 100 provided according to an implementation of this utility application, as viewed from another direction. In an embodiment of this utility application, a trigger ball accommodating portion 116 is further formed on the bottom wall 111 of the limiting portion 11, and the trigger ball accommodating portion 116 is, for example, integrally formed with the bottom wall 111. A trigger ball (not shown in the figures) for triggering the travel switch 3 is accommodated and held in the trigger ball accommodating portion 116. The trigger ball accommodating portion 116 is arranged on the bottom wall 111 of the limiting portion 11 and is configured as a cylinder protruding downwardly from the bottom wall 111, a through hole 117 is formed in the cylinder, the through hole 117 extends all the way to the lower surface of the travel switch 3, and the trigger ball can move by a stroke in the through hole 117 in the direction perpendicular to the fixing plate 2 and abut against a contact of the travel switch 3. In this embodiment, the travel switch 3 is not triggered directly by the locking block. Instead, the travel switch 3 is triggered in such a way that when the locking block rotates past the trigger ball on the limiting portion 11, the trigger ball is hit to move toward the travel switch 3 in the direction perpendicular to the fixing plate 2 and abut against the contact of the travel switch 3. By triggering the travel switch 3 in this way, it can be ensured that the contact of the travel switch 3 is triggered forwardly only by the trigger ball, thereby reducing the possibility that the contact of the travel switch 3 is subjected to a lateral force of the locking block. The stroke of the trigger ball in the through hole 117 is determined according to the height of the trigger ball accommodating portion 116, the height of the through hole 117 and the size of the trigger ball, and the through hole 117 at the lower surface of the trigger ball accommodating portion 116 is designed to have a diameter less than the diameter of the trigger ball so as to prevent the trigger ball from falling out of the through hole 117 due to gravity. The stroke of the trigger ball in the through hole 117 ensures that the trigger ball can abut against the contact of the travel switch 3 when subjected to a force of the locking block to move upwardly, thereby triggering the travel switch 3. When the locking block leaves, the trigger ball can also return to its original position by virtue of the gravity, to wait to be driven by the locking block. Typically, when the locking block does not pass by the trigger ball, the trigger ball partly protrudes from the through hole 117 to exceed the lower surface of the limiting portion 11 due to the gravity, and when the locking block passes by and hits against the trigger ball, the trigger ball moves toward the travel switch 3 until the trigger ball compresses the contact of the travel switch 3 to trigger the travel switch 3. For example, the trigger ball protrudes from the through hole 117 to exceed the lower surface of the limiting portion 11 by 1 mm when not driven by the locking block, and moves upwardly by 1.5 mm when hit by the locking block. A steel ball, for example, having a size of D4, is used as the trigger ball. Of course, balls having different sizes or made of different materials may also be used.

The limiting portion 11 is connected to the bracket mounting portion 12, a bracket mounting hole 121 is formed in the bracket mounting portion 12 and configured to fix the bracket 1 to the fixing plate 2 by means of a bolt, and a mounting hole 21 corresponding to the bracket mounting hole 121 is further formed in the fixing plate 2 to ensure precise positioning between the bracket 1 and the fixing plate 2. The bracket mounting portion 12 is connected to the intermediate connecting portion 13, the intermediate connecting portion 13 is configured to be of an arc-shaped structure having a certain length, and a wiring harness fixing portion 14 is formed at an end of the intermediate connecting portion 13 away from the bracket mounting portion 12 and is configured to receive and fix the wiring harness. Since the entire bracket 1 is fixed to the circular fixing plate 2, the arc-shaped configuration of the intermediate connecting portion 13 can match the shape of the fixing plate 2, facilitating the mounting of the bracket 1 at a plurality of assembly positions on the fixing plate 2 in a manner of matching with the shape of the fixing plate 2, so that a route of the wiring harness 4 forms a circular arc along the shape of the intermediate connecting portion 13. As shown in FIG. 1, a plurality of brackets 1 may be mounted on the fixing plate 2, such that the wiring harness 4 can be received along the circular arc-shaped intermediate connecting portions 13, and the wiring harness 4 received on the plurality of brackets 1 can form a large circular arc, thereby saving a storage space for the wiring harness 4. The wiring harness fixing portion 14 is, for example, integrally formed with the intermediate connecting portion 13. The wiring harness fixing portion 14 comprises two elastic protrusions 141 which are spaced apart from each other and protrude upwardly in the axial direction of the fixing plate 2. The two protrusions 141 are configured such that a gap between upper portions thereof is less than the diameter of the wiring harness, and a gap between lower portions thereof is greater than the diameter of the wiring harness. Since the protrusions 141 have elasticity, the wiring harness can be squeezed through the gap between the upper portions of the protrusions 141 and finally be accommodated in the gap between the lower portions of the protrusions 141, so that the wiring harness is received. Since the gap between the upper portions of the protrusions 141 is less than the diameter of the wiring harness, the wiring harness can be prevented from easily leaving the gap between the two protrusions 141, and the wiring harness 4 can also be conveniently taken out from the gap.

Reference is made to FIG. 4, which shows a schematic structural diagram of the fixing plate 2 of the fixing plate assembly 100 provided according to an implementation of this utility application. In another embodiment of this utility application, the fixing plate 2 is provided with a limiting portion mounting hole 22. The side walls of the limiting portion 11 are snapped into the limiting portion mounting hole 22 on the fixing plate 2, to cause the bottom wall 111 thereof to extend to the lower side of the fixing plate 2, so that the locking block can hit against the trigger ball accommodated in the trigger ball accommodating portion 116. In addition, the bracket 1 can be further limited in this way, and the fixing plate 2 surrounds the limiting portion 11, thereby increasing the rigidity and strength around the limiting portion 11.

According to another aspect of this utility application, further provided is a tow hook comprising the fixing plate assembly described above. The fixing plate assembly is connected to a main shaft of the tow hook.

It should be understood that the tow hook of this utility application can be mounted to various vehicles, including cars, trucks, buses, battery electric vehicles, hybrid vehicles, and so on. Therefore, the subject matter of this utility application further aims to set forth various vehicles equipped with the tow hook of this utility application.

It should be understood that all of the above preferred embodiments are exemplary rather than limiting, and any modification or variation made by those skilled in the art to the specific embodiments described above without departing from the concept of this utility application shall fall within the scope of legal protection of this utility application.

## Claims

1. A fixing plate assembly (100) for a tow hook of a vehicle, the fixing plate assembly (100) comprising a fixing plate (2) and a travel switch (3), wherein the fixing plate assembly (100) further comprises a bracket (1) fixed to the fixing plate (2), the travel switch (3) being mounted on a limiting portion (11) of the bracket (1), and the bracket (1) limiting the movement of the travel switch (3) by means of the limiting portion (11).

2. The fixing plate assembly (100) according to claim 1, wherein the limiting portion (11) is configured as a cover shaped to match the travel switch (3), a bottom wall (111) of the limiting portion is in contact with the travel switch (3), and side walls of the limiting portion surround the travel switch (3).

3. The fixing plate assembly (100) according to claim 2, wherein a first clamping wall (112) and a second clamping wall (113) are formed on the respective side walls, the first clamping wall (112) and the second clamping wall (113) are each formed between two grooves (114) formed in an individual side wall, the grooves (114) extend in a direction perpendicular to the fixing plate (2), the first clamping wall (112) clamps the position activated switch (3) in a first direction, and the second clamping wall (113) clamps the position activated switch (3) in a second direction which is perpendicular to the first direction.

4. The fixing plate assembly (100) according to claim 3, wherein a limiting hole (115) is formed in one of the side walls of the limiting portion (11), and a connecting post formed on one side of the travel switch (3) is engaged into the limiting hole (115).

5. The fixing plate assembly (100) according to claim 4, wherein there is one second clamping wall (113), which is formed on the side wall of the limiting portion (11) that is opposite to the limiting hole (115), and there are two first clamping walls (112), which are formed on the other two opposite side walls of the limiting portion (11).

6. The fixing plate assembly (100) according to claim 2, wherein a limiting portion mounting hole (22) is formed in the fixing plate (2), and the side walls of the limiting portion (11) are snapped into the limiting portion mounting hole (22).

7. The fixing plate assembly (100) according to claim 6, wherein a trigger ball accommodating portion (116) is formed on the limiting portion (11), a through hole (117) is formed in the trigger ball accommodating portion (116), a trigger ball for triggering the travel switch (3) is accommodated in the through hole (117), and the trigger ball is pushable by the locking block of the tow hook to move in the through hole (117) in the direction perpendicular to the fixing plate (2) and abuts against a contact of the travel switch (3).

8. The fixing plate assembly (100) according to any one of claims 1 to 7, wherein the bracket (1) further comprises a wiring harness fixing portion (14) connected to the limiting portion (11), and the wiring harness fixing portion (14) fixes a wiring harness of the travel switch (3) to the bracket (1).

9. The fixing plate assembly (100) according to claim 8, wherein the bracket (1) further comprises a bracket mounting portion (12) connected to the limiting portion, a bracket mounting hole (121) is formed in the bracket mounting portion (12), and the bracket (1) is mounted on the fixing plate (2) by means of a bolt through the bracket mounting hole (121).

10. The fixing plate assembly (100) according to claim 9, wherein the bracket (1) further comprises an arc-shaped intermediate connecting portion (13) with one end connected to the bracket mounting portion (12), and the wiring harness fixing portion (14) is arranged at the other end of the intermediate connecting portion (13).

11. A tow hook, comprising a fixing plate assembly (100) according to any one of claims 1 to 10.

12. A vehicle, comprising a tow hook according to claim 11.
